# EUROPEAN PATENT SPECIFICATION

(11) **EP 4 300 908 B1**
(45) Date of publication and mention of the grant of the patent: **19.02.2025**
(21) Application number: 23165914.5
(22) Date of filing: 31.03.2023
(51) Int. Cl.: H04L 41/0803, H04L 61/2517, H04L 61/00, H04L 101/663

(54) **BASE STATION MANAGEMENT SYSTEM AND METHOD**
BASISSTATIONSVERWALTUNGSSYSTEM UND -VERFAHREN
SYSTÈME ET PROCÉDÉ DE GESTION DE STATION DE BASE

(30) Priority: 29.06.2022 CN 202210758351
(43) Date of publication of application: 03.01.2024
(73) Proprietor: Lite-On Technology Corporation, Taipei City 11492 (TW)
(72) Inventor: HSIEH, Sheng Hung, Taipei City (TW); LIN, Ta, Taipei City (TW)
(74) Representative: Patentship Patentanwaltsgesellschaft mbH

(56) References cited:
- KR-A- 20020 091 483
- US-A1- 2007 070 987

## Description

### BACKGROUND OF THE INVENTION

### Field of the Invention

The invention generally relates to authentication technology, and more particularly, to base station management technology in which a base station management device is configured to manage a plurality of base stations in a Call-Home mechanism.

### Description of the Related Art

In the 5G Open Radio Access Network (O-RAN) structure, the Element Management System (EMS) network management end may communicate with the base station end through an O1 interface. The O1 interface is realized based on the Network Configuration Protocol (NETCONF). The NETCONF is a network management standard developed and standardized by the Internet Engineering Task Force (IETF).

In a traditional base station deployment, the EMS network management end needs to know the Internet Protocol Address (IP address) of each base station, and based on the IP address of each base station, the EMS network management end establishes the link with each base station through the Transmission Control Protocol (TCP) and Secure Shell (SSH) protocol to manage each base station. However, when there are a lot of base stations, the EMS network management end may take a lot of time to establish links with the base stations. Therefore, a Call-Home mechanism is proposed. In a Call-Home mechanism, when a base station leaves the factory, the IP of the EMS network management end and the default port number 4334 may be written in the base station. When the base station is enabled, based on the Call-Home mechanism, the base station may use the IP of the EMS network management end and the default port number to establish the link with the EMS network management end through TCP and SSH.

However, in the current Call-Home mechanism, each base station may send the link request to the EMS network based on the same IP of the EMS network management end and the default port number. After a first base station has established the link with the EMS network management end, if the link needs to be maintained, the default port number will be occupied. Therefore, when a second base station sends a link request, because the default port number has been occupied by the first base station, the second base station may not establish a link with the EMS network management end. Therefore, in the current Call-Home mechanism, the EMS network management end only can manage one base station.

US 2007/070987 A1 discloses a wireless communication terminal.

KR 2002 0091483 A discloses a method for assigning a multi-port.

### BRIEF SUMMARY OF THE INVENTION

The present invention is set out in the appended set of claims.

A base station management system and method are provided to overcome the problems mentioned above.

A first aspect of the invention provides a base station management system, comprising: a base station management device, managing a plurality of base stations; and a first base station, sending a first link request to the base station management device based on a default port number and a base station management device address through a communication interface, wherein after the base station management device receives the first link request, the base station management device establishes a link with the first base station based on the first link request, and changes a port number corresponding to the first base station from the default number to an unused first port number to release the default port number, wherein the first base station establishes the link with the base station management device again based on the first port number.

After the base station management device changes the port number corresponding to the first base station from the default number to the first port number, the base station management device terminates the link with the first base station.

After the base station management device terminates the link with the first base station, the first base station sends the first link request to the base station management device based on the first port number and the base station management device address through the communication interface, and after the base station management device receives the first link request, the base station management device establishes the link with the first base station again based on the first link request.

In a further embodiment of the first aspect, the base station management system further comprises: a second base station, sending a second link request to the base station management device based on the default port number and the base station management device address through the communication interface, wherein after the base station management device receives the second link request, the base station management device establishes a link with the second base station based on the second link request, and changes a port number corresponding to the second base station from the default number to an unused second port number to release the default port number, wherein the second base station establishes the link with the base station management device again based on the second port number.

In a further embodiment of the first aspect in combination with the third embodiment of the first aspect, the first port number and the second port number are comprised in an unused port number interval.

In a further embodiment of the first aspect in combination with the third embodiment of the first aspect, the base station management device adds a value to the first port number to generate the second port number.

In a further embodiment of the first aspect, the communication interface is an O1 interface.

In a further embodiment of the first aspect, the links between the base station management device and the base stations are established based on Transmission Control Protocol (TCP) and Secure Shell (SSH) protocol.

A second aspect of the invention provides a base station management method, applied to a base station management system, comprising: sending, by a first base station of the base station management system, a first link request to a base station management device of the base station management system based on a default port number and a base station management device address through a communication interface; after the base station management device receives the first link request, establishing, by the base station management device, a link with the first base station based on the first link request; changing, by the base station management device, a port number corresponding to the first base station from the default number to an unused first port number to release the default port number; establishing, by the first base station, the link with the base station management device again based on the first port number.

The base station management method further comprises: after the base station management device changes the port number corresponding to the first base station from the default number to the first port number, terminating, by the base station management device, the link with the first base station.

The base station management method further comprises: after the base station management device terminates the link with the first base station, sending, by the first base station, the first link request to the base station management device based on the first port number and the base station management device address through the communication interface; and after the base station management device receives the first link request, establishing, by the base station management device, the link with the first base station again based on the first link request.

In a further embodiment of the second aspect, the base station management further comprises: sending, by a second base station of the base station management system, a second link request to the base station management device based on the default port number and the base station management device address through the communication interface; after the base station management device receives the second link request, establishing, by the base station management device, a link with the second base station based on the second link request; changing, by the base station management device, a port number corresponding to the second base station from the default number to an unused second port number to release the default port number; and establishing, by the second base station, the link with the base station management device again based on the second port number.

In a further embodiment of the second aspect in combination with the third embodiment of the second aspect, the first port number and the second port number are comprised in an unused port number interval.

In a further embodiment of the second aspect in combination with the third embodiment of the second aspect, the base station management method further comprises: adding, by the base station management device, a value to the first port number to generate the second port number.

In a further embodiment of the second aspect, the communication interface is an O1 interface.

In a further embodiment of the second aspect, the links between the base station management device and the base stations are established based on Transmission Control Protocol (TCP) and Secure Shell (SSH) protocol.

Other aspects and features of the invention will become apparent to those with ordinary skill in the art upon review of the following descriptions of specific embodiments of an authentication system and method.

### BRIEF DESCRIPTION OF THE DRAWINGS

The invention will become more fully understood by referring to the following detailed description with reference to the accompanying drawings, wherein:
FIG.1 is a block diagram of base station management system 100 according to an embodiment of the invention;
FIG. 2A-2B is a flow chart of establishing link between the base station management device and a plurality of base stations according to an embodiment of the invention;
FIG. 3 is a flow chart illustrating a base station management method according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

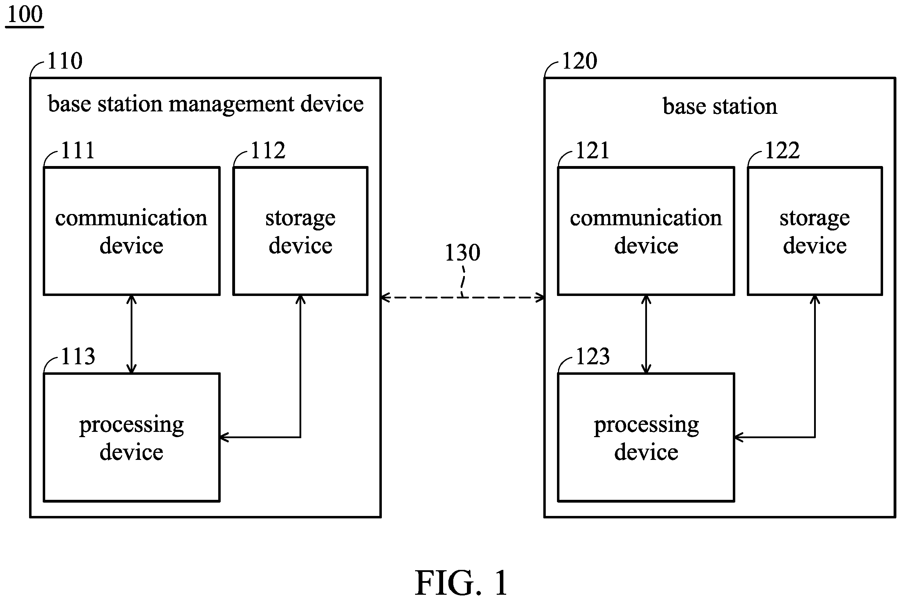

FIG.1 is a block diagram of base station management system 100 according to an embodiment of the invention. As shown in FIG. 1, the base station management system 100 may comprise at least a base station management device 110, at least one base station 120 and a communication interface 130. It should be noted that in order to clarify the concept of the invention, FIG. 1 presents a simplified block diagram in which only the elements relevant to the invention are shown. However, the invention should not be limited to what is shown in FIG. 1. The base station management system 100 may comprise a plurality of base stations.

According to an embodiment of the invention, the base station management system 100 may be applied in an Open Radio Access Network (O-RAN) structure. In addition, in the embodiments of the invention, the base station management device 110 may establish the link with the base station 120 based on the Transmission Control Protocol (TCP) and Secure Shell (SSH) protocol. In addition, in the embodiments of the invention, the Call-Home mechanism is adopted to establish the link between the base station management device 110 and the base station 120, i.e., the link request is initiated by the base station end based on the information of the network management end.

According to an embodiment of the invention, the base station management device 110 may be an Element Management System (EMS). The base station management device 110 may manage a plurality of base stations. As shown in FIG. 1, the base station management device 110 may comprise a communication device 111, a storage device 112 and a processing device 113. It should be noted that in order to clarify the concept of the invention, the base station management device 110 of FIG. 1 presents a simplified block diagram in which only the elements relevant to the invention are shown. However, the invention should not be limited to what is shown in FIG. 1. The base station management device 110 may also comprise other elements.

The communication device 111 may transmit data or information to the base station 120 through the communication interface 130, and receive data of information from the base station 120 through the communication interface 130. According to the embodiments of the invention, the communication interface 130 may be the O1 interface.

The storage device 112 may store the software and firmware program codes, system data, user data, etc. of the base station management device 110. The storage device 112 may be a volatile memory such as a Random Access Memory (RAM); a non-volatile memory such as a flash memory or Read-Only Memory (ROM); a hard disk; or any combination thereof.

The processor 113 may control the operations of the communication device 111 and the storage device 112. According to an embodiment of the invention, the processor 113 may also be arranged to execute the program codes stored in the storage device 112. The program codes accompanied by specific data in a data structure may also be referred to as a processor logic unit or a stack instance when being executed. Therefore, the processor 113 may be regarded as being comprised of a plurality of processor logic units, each for executing one or more specific functions or tasks of corresponding software modules.

According to an embodiment of the invention, the base station 120 may be a Generation Node B (gNB). As shown in FIG. 1, the base station 120 may comprise a communication device 121, a storage device 122 and a processing device 123. It should be noted that in order to clarify the concept of the invention, the base station 120 of FIG. 1 presents a simplified block diagram in which only the elements relevant to the invention are shown. However, the invention should not be limited to what is shown in FIG. 1. The base station 120 may also comprise other elements

The communication device 121 may transmit data or information to the base station management device 110 through the communication interface 130, and receive data of information from the base station management device 110 through the communication interface 130.

The storage device 122 may store the software and firmware program codes, system data, user data, etc. of the base station 120. In addition, according to an embodiment of the invention, the storage device 122 may pre-store a default port number (e.g., 4334) and a base station management device address (i.e., the Internet Protocol Address (IP address) of the base station management device 110). The default port number and the address of the base station may be pre-written in the storage device 122 before the base station leaves the factory. The storage device 122 may be a volatile memory such as a Random Access Memory (RAM); a non-volatile memory such as a flash memory or Read-Only Memory (ROM); a hard disk; or any combination thereof. The processor 123 may control the operations of the communication device 121 and the storage device 122.

According to an embodiment of the invention, the processor 123 may also be arranged to execute the program codes stored in the storage device 122. The program codes accompanied by specific data in a data structure may also be referred to as a processor logic unit or a stack instance when being executed. Therefore, the processor 123 may be regarded as being comprised of a plurality of processor logic units, each for executing one or more specific functions or tasks of corresponding software modules.

According to an embodiment of the invention, after the base station 120 is turned on, the base station 120 may automatically send a link request to the base station management device 110 through the communication interface 130 (e.g., O1 interface) based on the pre-stored default port number (e.g., 4334).

After the base station management device 110 receives the link request from the base station 120, the base station management device 110 may perform authentication for the base station 120 based on the information (e.g., the name and the password corresponding to the base station120) loaded in the link request. When the authentication is successful, the base station management device 110 may transmit the message indicating that the link is established successfully to the base station 120 through the communication interface (i.e., the O1 interface).

Then, the base station management device 110 changes the port number corresponding to the base station 120 from the default port number to an unused port number (e.g., change from 4334 to 43334) to release the default port number (i.e., the default number is unused currently). The base station management device 110 may also tell the changed port number to the base station 120 through the communication interface 130. After the default port number is released, another base station may be able to use the default port number to establish link with the base station management device 110.

According to an embodiment of the invention, the base station management device 110 selects one or more unused port numbers from a port number interval. According to an embodiment of the invention, when the base station management device 110 wants to select a next unused port number, the base station management device 110 may add a value to the prior selected unused port number (e.g., +1) to generate the port number which will be selected next time.

After the base station management device 110 changes the port number corresponding to the base station 120 from the default number to an unused port number, the base station management device 110 starts to monitor the port corresponding to the changed port number, and terminate the link with the base station 120 first.

After the base station management terminates the link with the base station 120, the base station 120 sends the link request to the base station management device 110 again through the communication interface based on the changed port number and the IP address of the base station management device 110. The base station management device 110 establishes the link with the base station 120 again according to the link request from the base station 120.

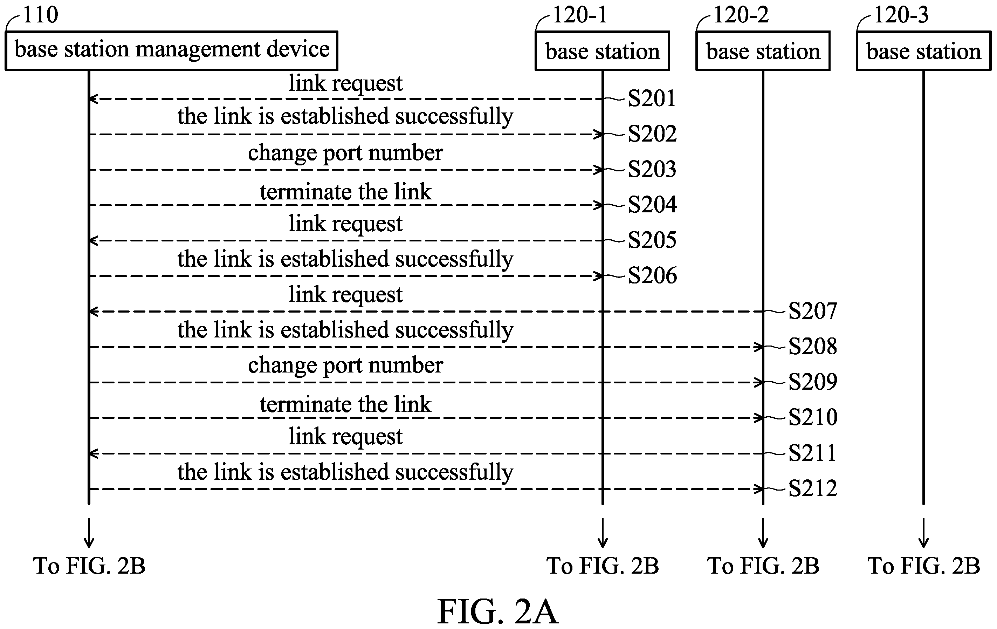

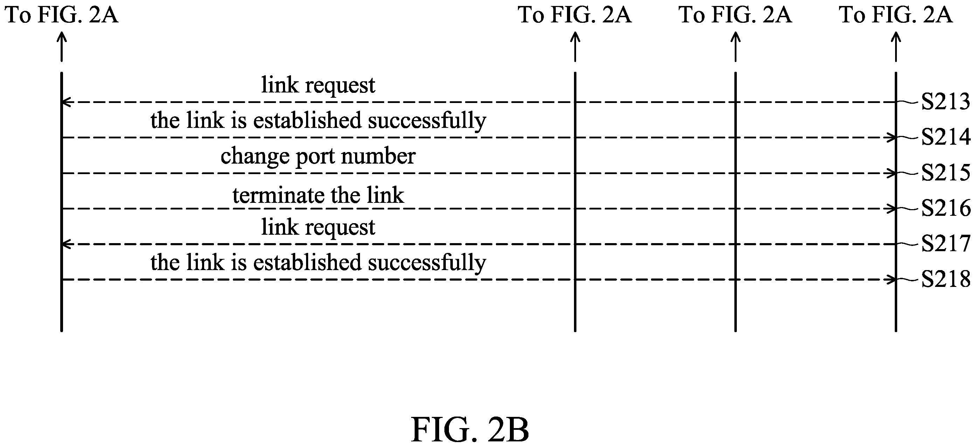

Accordingly, when another base station sends link request to the base station management device 110 base on the default port number (e.g., 4334) and the IP address of the base station management device 110 through the communication interface 130 to request establish the link with the base station management device 110. The base station management device 110 may perform the same operations discussed in the above embodiments. Details are discussed below by referring to FIGs 2A-2B.

FIG. 2A-2B is a flow chart of establishing link between the base station management device and a plurality of base stations according to an embodiment of the invention. The flow shown in FIG. 2A-2B may be applied to the base station management system 100. The base station 120 may also be applied to the base stations 120-1~120-3 of FIG. 2A-2B. As shown in FIG. 2A-2B, in step S201, the base station 120-1 sends a link request to the base station management 110 based on pre-stored default port number (e.g., 4334) and IP address of the base station management device 110 through the communication interface (i.e., O1 interface).

In step S202, when the base station management device 110 authenticates the base station 120-1 successfully based on the link request from the base station 120-1, the base station management device 110 may transmit the message indicating that the link is established successfully to the base station 120-1 through the communication interface.

In step S203, the base station management device 110 changes the port number corresponding to the base station 120-1 from the default port number to an unused first port number (e.g., from 4334 to 43334) to release the default port number, and then the base station management device 110 may tell the base station 120-1 the information of the changed port number through the communication interface. In addition, the base station management device 110 starts to monitor the port corresponding to the first port number.

In step S204, the base station management device 110 terminates the link with the base station 120-1 first.

In step S205, the base station 120-1 sends the link request to base station management device 110 again based on the first port number and the IP address of the base station management device 110 through the communication interface (i.e., O1 interface).

In step S206, when the base station management device 110 authenticates the base station 120-1 successfully based on the link request from the base station 120-1, the base station management device 110 may transmit the message indicating that the link is established successfully to the base station 120-1 through the communication interface.

In step S207, because the default port number (e.g., 4334) has been released, the base station 120-2 may send a link request to the base station management 110 based on pre-stored default port number (e.g., 4334) and IP address of the base station management device 110 through the communication interface (i.e., O1 interface).

In step S208, when the base station management device 110 authenticates the base station 120-2 successfully based on the link request from the base station 120-2, the base station management device 110 may transmit the message indicating that the link is established successfully to the base station 120-2 through the communication interface.

In step S209, the base station management device 110 may change the port number corresponding to the base station 120-2 from the default port number to an unused second port number (e.g., from 4334 to 43335) to release the default port number, and then the base station management device 110 may tell the base station 120-2 the information of the changed port number through the communication interface. In addition, the base station management device 110 may start to monitor the port corresponding to the second port number.

In step S210, the base station management device 110 may terminate the link with the base station 120-2 first.

In step S211, the base station 120-2 may send the link request to base station management device 110 again based on the second port number and the IP address of the base station management device 110 through the communication interface (i.e., O1 interface).

In step S212, when the base station management device 110 authenticates the base station 120-2 successfully based on the link request from the base station 120-2, the base station management device 110 may transmit the message indicating that the link is established successfully to the base station 120-2 through the communication interface.

In step S213, because the default port number (e.g., 4334) has been released, the base station 120-3 may send a link request to the base station management 110 based on pre-stored default port number (e.g., 4334) and IP address of the base station management device 110 through the communication interface (i.e., O1 interface).

In step S214, when the base station management device 110 authenticates the base station 120-3 successfully based on the link request from the base station 120-3, the base station management device 110 may transmit the message indicating that the link is established successfully to the base station 120-3 through the communication interface.

In step S215, the base station management device 110 may change the port number corresponding to the base station 120-3 from the default port number to an unused third port number (e.g., from 4334 to 43336) to release the default port number, and then the base station management device 110 may tell the base station 120-3 the information of the changed port number through the communication interface. In addition, the base station management device 110 may start to monitor the port corresponding to the third port number.

In step S216, the base station management device 110 may terminate the link with the base station 120-3 first.

In step S217, the base station 120-3 may send the link request to base station management device 110 again based on the third port number and the IP address of the base station management device 110 through the communication interface (i.e., O1 interface).

In step S218, when the base station management device 110 authenticates the base station 120-3 successfully based on the link request from the base station 120-3, the base station management device 110 may transmit the message indicating that the link is established successfully to the base station 120-3 through the communication interface.

According to the flow chart shown in FIG. 2A-2B, the base station management device 110 may manage base stations 120-1~120-3 at the same time through the Call-Home mechanism. In addition, it should be noted that there are three base stations 120-1~120-3 in the flow chart shown in FIG. 2A-2B, but the invention should not be limited thereto. The flow chart shown in FIG. 2A-2B may be applied to more base stations.

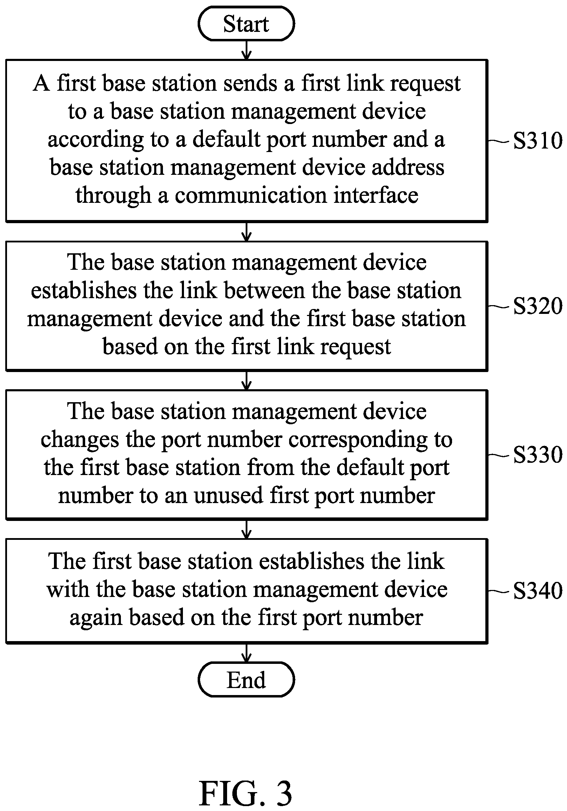

FIG. 3 is a flow chart illustrating a base station management method according to an embodiment of the invention. The base station management method can be applied to the base station management system 100. As shown in FIG. 3, in step S310, a first base station of the base station management system 100 sends a first link request to a base station management device of the base station management system 100 according to a default port number and a base station management device address (i.e., the IP address of the base station management device) through a communication interface. According to an embodiment of the invention, the communication interface is O1 interface.

In step S320, after the base station management device of the base station management system 100 receives the first link request, the base station management device of the base station management system 100 establishes the link between the base station management device and the first base station based on the first link request.

In step S330, the base station management device of the base station management system 100 changes the port number corresponding to the first base station from the default port number to an unused first port number to release the default port number.

In step S340, the first base station of the base station management system 100 establishes the link with the base station management device of the base station management system 100 again based on the first port number.

According to an embodiment of the invention, in the base station management method, after the base station management device of the base station management system 100 changes the port number corresponding to the first base station from the default port number to the first port number, the base station management device terminates the link between the base station management device and the first base station. After the base station management device terminates the link between the base station management device and the first base station, the first base station of the base station management system 100 sends the first link request to the base station management device of the base station management system 100 according to the first port number and the base station management device address (i.e., the IP address of the base station management device) through a communication interface. After the base station management device of the base station management system 100 receives the first link request, the base station management device of the base station management system 100 establishes the link between the base station management device and the first base station again based on the first link request.

According to an embodiment of the invention, in the base station management method, a second base station of the base station management system 100 sends a second link request to the base station management device of the base station management system 100 according to the default port number and the base station management device address (i.e., the IP address of the base station management device) through the communication interface. After the base station management device of the base station management system 100 receives the second link request, the base station management device of the base station management system 100 establishes the link between the base station management device and the second base station based on the second link request. Then, the base station management device of the base station management system 100 changes the port number corresponding to the second base station from the default port number to an unused second port number to release the default port number. The second base station of the base station management system 100 may establish the link with the base station management device of the base station management system 100 again based on the second port number.

According to the base station management method provided in the invention, the base station management may use the Call-Home mechanism to establish the links between the base station management device and a plurality of base stations to manage base stations at the same time.

Use of ordinal terms such as "first", "second", "third", etc., in the disclosure and claims is for description. It does not by itself connote any order or relationship.

The steps of the method described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such that the processor can read information (e.g., code) from and write information to the storage medium. A sample storage medium may be integral to the processor. The processor and the storage medium may reside in an ASIC. The ASIC may reside in user equipment. Alternatively, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

The above paragraphs describe many aspects. Obviously, the teaching of the invention can be accomplished by many methods, and any specific configurations or functions in the disclosed embodiments only present a representative condition. Those who are skilled in this technology will understand that all of the disclosed aspects in the invention can be applied independently or be incorporated.

While the invention has been described by way of example and in terms of preferred embodiment, it should be understood that the invention is not limited thereto. Those who are skilled in this technology can still make various alterations and modifications without departing from the scope of this invention. Therefore, the scope of the present invention shall be defined and protected by the following claims.

## Claims

1. A base station management system (100), comprising:
a base station management device (110), managing a plurality of base stations (120-1, 120-2, 120-3); and
a first base station (120-1), sending a first link request to the base station management device (110) based on a default port number and a base station management device (110) address through a communication interface (130),
wherein after the base station management device (110) receives the first link request, the base station management device (110) establishes a link with the first base station (120-1) based on the first link request, and changes a port number corresponding to the first base station (120-1) from the default number to an unused first port number to release the default port number,
wherein the first base station (120-1) establishes the link with the base station management device (110) again based on the first port number,
wherein after the base station management device (110) changes the port number corresponding to the first base station (120-1) from the default number to the first port number, the base station management device (110) terminates the link with the first base station (120-1),
wherein after the base station management device (110) terminates the link with the first base station (120-1), the first base station (120-1) sends the first link request to the base station management device (110) again based on the first port number and the base station management device (110) address through the communication interface (130), and after the base station management device (110) receives the first link request again, the base station management device (110) establishes the link with the first base station (120-1) again based on the first link request.

2. The base station management system (100) of claim 1, further comprising:
a second base station (120-2), sending a second link request to the base station management device (110) based on the default port number and the base station management device (110) address through the communication interface (130),
wherein after the base station management device (110) receives the second link request, the base station management device (110) establishes a link with the second base station (120-2) based on the second link request, and changes a port number corresponding to the second base station (120-2) from the default number to an unused second port number to release the default port number,
wherein the second base station (120-2) establishes the link with the base station management device (110) again based on the second port number.

3. The base station management system (100) of claim 2, wherein the first port number and the second port number are comprised in an unused port number interval.

4. The base station management system (100) of claim 2, wherein the base station management device (110) adds a value to the first port number to generate the second port number.

5. The base station management system (100) of claim 1, wherein the communication interface (130) is an O1 interface.

6. The base station management system (100) of claim 1, wherein the links between the base station management device (110) and the base stations (120-1, 120-2, 120-3) are established based on Transmission Control Protocol, TCP, and Secure Shell, SSH, protocol.

7. A base station management method, applied to a base station management system (100), comprising:
sending (S310), by a first base station (120-1) of the base station management system (100), a first link request to a base station management device (110) of the base station management system (100) based on a default port number and a base station management device (110) address through a communication interface (130);
after the base station management device (110) receives the first link request, establishing (S320), by the base station management device (110), a link with the first base station (120-1) based on the first link request;
changing (S330), by the base station management device (110), a port number corresponding to the first base station (120-1) from the default number to an unused first port number to release the default port number;
after the base station management device (110) changes the port number corresponding to the first base station (120-1) from the default number to the first port number, terminating, by the base station management device (110), the link with the first base station (120-1);
after the base station management device (110) terminates the link with the first base station (120-1), sending, by the first base station (120-1), the first link request to the base station management device (110) again based on the first port number and the base station management device (110) address through the communication interface (130); and
after the base station management device (110) receives the first link request again, establishing, by the base station management device (110), the link with the first base station (120-1) again based on the first link request;
establishing (S340), by the first base station (120-1), the link with the base station management device (110) again based on the first port number.

8. The base station management method of claim 7, further comprising:
sending, by a second base station (120-2) of the base station management system (100), a second link request to the base station management device (110) based on the default port number and the base station management device (110) address through the communication interface (130);
after the base station management device (110) receives the second link request, establishing, by the base station management device (110), a link with the second base station (120-2) based on the second link request;
changing, by the base station management device (110), a port number corresponding to the second base station (120-2) from the default number to an unused second port number to release the default port number; and
establishing, by the second base station (120-2), the link with the base station management device (110) again based on the second port number.

9. The base station management method of claim 8, wherein the first port number and the second port number are comprised in an unused port number interval.

10. The base station management method of claim 8, further comprising:
adding, by the base station management device (110), a value to the first port number to generate the second port number.

11. The base station management method of claim 7, wherein the communication interface (130) is an O1 interface; or wherein the links between the base station management device (110) and the base stations (120-1, 120-2, 120-3) are established based on Transmission Control Protocol, TCP, and Secure Shell, SSH, protocol.

## Patentansprüche

1. Basisstationsverwaltungssystem (100), umfassend:
eine Basisstationsverwaltungsvorrichtung (110), die eine Vielzahl von Basisstationen (120-1, 120-2, 120-3) verwaltet; und
eine erste Basisstation (120-1), die eine erste Verbindungsanforderung an die Basisstationsverwaltungsvorrichtung (110) basierend auf einer Standardportnummer und einer Basisstationsverwaltungsvorrichtungsadresse über eine Kommunikationsschnittstelle (130) sendet,
wobei die Basisstationsverwaltungsvorrichtung (110) nach dem Empfang der ersten Verbindungsanforderung eine Verbindung mit der ersten Basisstation (120-1) basierend auf der ersten Verbindungsanforderung herstellt und eine der ersten Basisstation (120-1) entsprechende Portnummer von der Standardnummer in eine nicht verwendete erste Portnummer ändert, um die Standardportnummer freizugeben,
wobei die erste Basisstation (120-1) die Verbindung mit der Basisstationsverwaltungsvorrichtung (110) wiederum basierend auf der ersten Portnummer herstellt,
wobei, nachdem die Basisstationsverwaltungsvorrichtung (110) die der ersten Basisstation (120-1) entsprechende Portnummer von der Standardnummer auf die erste Portnummer ändert, die Basisstationsverwaltungsvorrichtung (110) die Verbindung mit der ersten Basisstation (120-1) beendet,
wobei, nachdem die Basisstationsverwaltungsvorrichtung (110) die Verbindung mit der ersten Basisstation (120-1) beendet, die erste Basisstation (120-1) die erste Verbindungsanforderung basierend auf der ersten Portnummer und der Basisstationsverwaltungsvorrichtungsadresse über die Kommunikationsschnittstelle (130) an die Basisstationsverwaltungsvorrichtung (110) erneut sendet, und nachdem die Basisstationsverwaltungsvorrichtung (110) die erste Verbindungsanforderung erneut empfängt, die Basisstationsverwaltungsvorrichtung (110) die Verbindung mit der ersten Basisstation (120-1) basierend auf der ersten Verbindungsanforderung erneut herstellt.

2. Basisstationsverwaltungssystem (100) nach Anspruch 1, ferner umfassend:
eine zweite Basisstation (120-2), die eine zweite Verbindungsanforderung an die Basisstationsverwaltungsvorrichtung (110) basierend auf der Standardportnummer und der Basisstationsverwaltungsvorrichtungsadresse über die Kommunikationsschnittstelle (130) sendet,
wobei die Basisstationsverwaltungsvorrichtung (110) nach dem Empfang der zweiten Verbindungsanforderung eine Verbindung mit der zweiten Basisstation (120-2) basierend auf der zweiten Verbindungsanforderung herstellt und eine der zweiten Basisstation (120-2) entsprechende Portnummer von der Standardnummer in eine nicht verwendete zweite Portnummer ändert, um die Standardportnummer freizugeben,
wobei die zweite Basisstation (120-2) die Verbindung mit der Basisstationsverwaltungsvorrichtung (110) basierend auf der zweiten Portnummer erneut herstellt.

3. Basisstationsverwaltungssystem (100) nach Anspruch 2, wobei die erste Portnummer und die zweite Portnummer in einem ungenutzten Portnummernintervall enthalten sind.

4. Basisstationsverwaltungssystem (100) nach Anspruch 2, wobei die Basisstationsverwaltungsvorrichtung (110) zu der ersten Portnummer einen Wert hinzufügt, um die zweite Portnummer zu erzeugen.

5. Basisstationsmanagementsystem (100) nach Anspruch 1, wobei die Kommunikationsschnittstelle (130) eine O1-Schnittstelle ist.

6. Basisstationsmanagementsystem (100) nach Anspruch 1, wobei die Verbindungen zwischen der Basisstationsverwaltungsvorrichtung (110) und den Basisstationen (120-1, 120-2, 120-3) basierend auf Übertragungssteuerungsprotokoll, TCP, und Secure-Shell-, SSH-, Protokoll hergestellt werden.

7. Basisstationsverwaltungsverfahren, das auf ein Basisstationsverwaltungssystem (100) angewendet wird, umfassend:
Senden (S310) einer ersten Verbindungsanforderung an eine Basisstationsverwaltungsvorrichtung (110) des Basisstationsverwaltungssystems (100) durch eine erste Basisstation (120-1) des Basisstationsverwaltungssystems (100) basierend auf einer Standardportnummer und einer Basisstationsverwaltungsvorrichtungsadresse über eine Kommunikationsschnittstelle (130);
nachdem die Basisstationsverwaltungsvorrichtung (110) die erste Verbindungsanforderung empfängt, Herstellen (S320) einer Verbindung mit der ersten Basisstation (120-1) durch die Basisstationsverwaltungsvorrichtung (110) basierend auf der ersten Verbindungsanforderung;
Ändern (S330) einer der ersten Basisstation (120-1) entsprechenden Portnummer durch die Basisstationsverwaltungsvorrichtung (110) von der Standardnummer in eine nicht verwendete erste Portnummer, um die Standardportnummer freizugeben;
nachdem die Basisstationsverwaltungsvorrichtung (110) die der ersten Basisstation (120-1) entsprechende Portnummer von der Standardnummer auf die erste Portnummer ändert, Beenden der Verbindung mit der ersten Basisstation (120-1) durch die Basisstationsverwaltungsvorrichtung (110);
nachdem die Basisstationsverwaltungsvorrichtung (110) die Verbindung mit der ersten Basisstation (120-1) beendet, erneutes Senden der ersten Verbindungsanforderung, durch die erste Basisstation (120-1), basierend auf der ersten Portnummer und der Basisstationsverwaltungsvorrichtungsadresse über die Kommunikationsschnittstelle (130) an die Basisstationsverwaltungsvorrichtung (110); und
nachdem die Basisstationsverwaltungsvorrichtung (110) die erste Verbindungsanforderung erneut empfängt, erneutes Herstellen der Verbindung mit der ersten Basisstation (120-1) durch die Basisstationsverwaltungsvorrichtung (110) basierend auf der ersten Verbindungsanforderung;
und erneutes Herstellen (S340) der Verbindung mit der Basisstationsverwaltungsvorrichtung (110) durch die erste Basisstation (120-1) basierend auf der ersten Portnummer.

8. Basisstationsverwaltungsverfahren nach Anspruch 7, ferner umfassend:
Senden einer zweiten Verbindungsanforderung durch eine zweite Basisstation (120-2) des Basisstationsverwaltungssystems (100) an die Basisstationsverwaltungsvorrichtung (110) basierend auf der Standardportnummer und der Basisstationsverwaltungsvorrichtungsadresse über die Kommunikationsschnittstelle (130);
nachdem die Basisstationsverwaltungsvorrichtung (110) die zweite Verbindungsanforderung empfängt, Herstellen einer Verbindung mit der zweiten Basisstation (120-2) durch die Basisstationsverwaltungsvorrichtung (110) basierend auf der zweiten Verbindungsanforderung;
Ändern einer der zweiten Basisstation (120-2) entsprechenden Portnummer durch die Basisstationsverwaltungsvorrichtung (110) von der Standardnummer auf eine nicht verwendete zweite Portnummer, um die Standardportnummer freizugeben; und
und erneutes Herstellen der Verbindung mit der Basisstationsverwaltungsvorrichtung (110) durch die zweite Basisstation (120-2) basierend auf der zweiten Portnummer.

9. Basisstationsverwaltungsverfahren nach Anspruch 8, wobei die erste Portnummer und die zweite Portnummer in einem ungenutzten Portnummernintervall enthalten sind.

10. Basisstationsverwaltungsverfahren nach Anspruch 8, ferner umfassend:
Hinzufügen eines Wertes zu der ersten Portnummer durch die Basisstationsverwaltungsvorrichtung (110), um die zweite Portnummer zu erzeugen.

11. Basisstationsverwaltungsverfahren nach Anspruch 7, wobei die Kommunikationsschnittstelle (130) eine O1-Schnittstelle ist; oder wobei die Verbindungen zwischen der Basisstationsverwaltungsvorrichtung (110) und den Basisstationen (120-1, 120-2, 120-3) basierend auf Übertragungssteuerungsprotokoll, TCP, und Secure-Shell-, SSH-, Protokoll hergestellt werden.

## Revendications

1. **Un système** de gestion de station de base (100), comprenant :
un dispositif de gestion de station de base (110), gérant une pluralité de stations de base (120-1, 120-2, 120-3) ; et
un première station de base (120-1), envoyant une première demande de liaison au dispositif de gestion de station de base (110) sur la base d'un numéro de port par défaut et d'une adresse de dispositif de gestion de station de base (110) via une interface de communication (130),
dans lequel, après que le dispositif de gestion de station de base (110) a reçu la première demande de liaison, le dispositif de gestion de station de base (110) établit une liaison avec la première station de base (120-1) sur la base de la première demande de liaison, et modifie un numéro de port correspondant à la première station de base (120-1) du numéro par défaut à un premier numéro de port inutilisé pour libérer le numéro de port par défaut,
dans lequel la première station de base (120-1) établit la liaison avec le dispositif de gestion de station de base (110) à nouveau sur la base du premier numéro de port,
dans lequel, après que le dispositif de gestion de station de base (110) a modifié le numéro de port correspondant à la première station de base (120-1) du numéro par défaut au premier numéro de port, le dispositif de gestion de station de base (110) met fin à la liaison avec la première station de base (120-1),
dans lequel, après que le dispositif de gestion de station de base (110) a terminé la liaison avec la première station de base (120-1), la première station de base (120-1) envoie à nouveau la première demande de liaison au dispositif de gestion de station de base (110) sur la base du premier numéro de port et de l'adresse du dispositif de gestion de station de base (110) via l'interface de communication (130), et après que le dispositif de gestion de station de base (110) a reçu à nouveau la première demande de liaison, le dispositif de gestion de station de base (110) établit à nouveau la liaison avec la première station de base (120-1) sur la base de la première demande de liaison.

2. Le Système de gestion de station de base (100) selon la revendication 1, comprenant en outre :
**un** deuxième station de base (120-2), envoyant une deuxième demande de liaison au dispositif de gestion de station de base (110) sur la base du numéro de port par défaut et de l'adresse du dispositif de gestion de station de base (110) via l'interface de communication (130),
dans lequel, après que le dispositif de gestion de station de base (110) a reçu la seconde demande de liaison, le dispositif de gestion de station de base (110) établit une liaison avec la seconde station de base (120-2) sur la base de la seconde demande de liaison, et modifie **un** numéro de port correspondant à la seconde station de base (120-2) du numéro par défaut à **un** second numéro de port inutilisé pour libérer le numéro de port par défaut,
dans lequel la seconde station de base (120-2) établit la liaison avec le dispositif de gestion de station de base (110) à nouveau sur la base du second numéro de port.

3. Le Système de gestion de station de base (100) selon la revendication 2, dans lequel le premier numéro de port et le second numéro de port sont compris dans **un** intervalle de numéros de port inutilisé.

4. Le Système de gestion de station de base (100) selon la revendication 2, dans lequel le dispositif de gestion de station de base (110) ajoute une valeur au premier numéro de port pour générer le deuxième numéro de port .

5. Le système de gestion de station de base (100) selon la revendication 1, dans laquelle l' interface de communication (130) est une interface O1.

6. Le système de gestion de station de base (100) selon la revendication 1, dans laquelle les liaisons entre le dispositif de gestion de station de base (110) et les stations de base (120-1, 120-2, 120-3) sont établies sur la base du protocole de contrôle de transmission, TCP, et du protocole Secure Shell, SSH.

7. Une gestion de station de base procédé, appliqué à un système de gestion de station de base (100), comprenant :
envoi (S310), par une première station de base (120-1) du système de gestion de station de base (100), d'une première demande de liaison à un dispositif de gestion de station de base (110) du système de gestion de station de base (100) sur la base d'un numéro de port par défaut et d'une adresse de dispositif de gestion de station de base (110) via une interface de communication (130) ;
après que le dispositif de gestion de station de base (110) a reçu la première demande de liaison, établissement (S320), par le dispositif de gestion de station de base (110), d'une liaison avec la première station de base (120-1) sur la base de la première demande de liaison ;
changer (S330), par le dispositif de gestion de station de base (110), un numéro de port correspondant à la première station de base (120-1) du numéro par défaut à un premier numéro de port inutilisé pour libérer le numéro de port par défaut ;
après que le dispositif de gestion de station de base (110) a modifié le numéro de port correspondant à la première station de base (120-1) du numéro par défaut au premier numéro de port, mettre fin, par le dispositif de gestion de station de base (110), à la liaison avec la première station de base (120-1) ;
après le dispositif de gestion de station de base (110) termine la liaison avec la première station de base (120-1), en envoyant, par l'intermédiaire de la première station de base (120-1), la première demande de liaison au dispositif de gestion de station de base (110) à nouveau sur la base du premier numéro de port et de l'adresse du dispositif de gestion de station de base (110) via l'interface de communication (130) ; et
après que le dispositif de gestion de station de base (110) a reçu à nouveau la première demande de liaison, établir, par le dispositif de gestion de station de base (110), la liaison avec la première station de base (120-1) à nouveau sur la base de la première demande de liaison ;
établissement (S340), par la première station de base (120-1), de la liaison avec le dispositif de gestion de station de base (110) à nouveau sur la base du premier numéro de port.

8. Le gestion des stations de base procédé selon la revendication 7, comprenant en outre:
envoyer, par une seconde station de base (120-2) du système de gestion de station de base (100), une seconde demande de liaison au dispositif de gestion de station de base (110) sur la base du numéro de port par défaut et de l'adresse du dispositif de gestion de station de base (110) via l'interface de communication (130) ;
après que le dispositif de gestion de station de base (110) a reçu la seconde demande de liaison, établissement, par le dispositif de gestion de station de base (110), d'une liaison avec la seconde station de base (120-2) sur la base de la seconde demande de liaison ;
changer, par le dispositif de gestion de station de base (110), un numéro de port correspondant à la seconde station de base (120-2) du numéro par défaut à un second numéro de port inutilisé pour libérer le numéro de port par défaut ; et
établir, par la deuxième station de base (120-2), la liaison avec le dispositif de gestion de station de base (110) à nouveau sur la base du deuxième numéro de port.

9. Le gestion des stations de base Procédé selon la revendication 8, dans lequel le premier numéro de port et le deuxième numéro de port sont compris dans **un** intervalle de numéros de port inutilisés.

10. Le gestion des stations de base procédé selon la revendication 8, comprenant en outre :
ajout, par le dispositif de gestion de station de base (110), d'une valeur au premier numéro de port pour générer le deuxième numéro de port.

11. Le gestion des stations de base procédé selon la revendication 7, dans laquelle l' interface de communication (130) est une interface O1; ou dans laquelle les liaisons entre le dispositif de gestion de station de base (110) et les stations de base (120-1, 120-2, 120-3) sont établies sur la base du protocole de contrôle de transmission, TCP, et du protocole Secure Shell, SSH.
